Europäisches Patentamt

European Patent Office

Office européen des brevets

(11) Publication number: **0 444 439 A2**

# EUROPEAN PATENT APPLICATION

(21) Application number: **91101524.6**

(22) Date of filing: **05.02.91**

(51) Int. Cl.⁵: **A23L 1/212**, A23L 1/105, A23L 1/30

(30) Priority: **06.02.90 JP 25113/90**

(43) Date of publication of application:
**04.09.91 Bulletin 91/36**

(84) Designated Contracting States:
**DE ES FR GB IT**

(71) Applicant: **ADVANCE CO., LTD.**
**5-45-1001, Mukogawa-cho**
**Takarazuka-shi, Hyogo-ken(JP)**

(72) Inventor: **Takahashi, Satoru**
**1-3-1-1204, Akineminami-machi**
**Shimonoseki-shi, Yamaguchi-ken(JP)**

(74) Representative: **Schütz, Peter, Dipl.-Ing. et al**
**Dr. Dieter von Bezold Dipl.-Ing. Peter Schütz**
**Dipl.-Ing. Wolfgang Heusler Brienner Strasse**
**52**
**W-8000 München 2(DE)**

(54) Method for preparing food containing single cell plant.

(57) The method for preparing food containing single cell plant of the present invention comprises the steps of causing a cell separating enzyme to act on a plant at the determined pH to decompose the intercellular substance of plant, thereby making plant tissues into single cell gruel, removing the undecomposed substances to obtain single cell gruel suspension, and adding the obtained single cell gruel suspension to food.

EP 0 444 439 A2

## METHOD FOR PREPARING FOOD CONTAINING SINGLE CELL PLANT

The present invention relates to a method for easily preparing food of good quality containing single cell gruel of plant.

Agricultural products are crops of long growth period which are harvested and used after a long-term cultivation ranging from two or three months to a year, but when overproduced, since they are fresh products and short in the period of being fresh, they lose the commercial value due to denaturation or rottenness, and are often discarded. In mass processing factory such as canning factory, fruit juice making factory and pickling factory, fruits and vegetables are massively collected and pretreated, but the husks, processing pulp, and waste chips of fruits and vegetables are discharged in a large quantity at this time. However, an effective method of utilization has not been found yet for either overproduced agricultural products or processed waste residue. To develop an effective method of utilization of excessive agricultural products, processed residue, and further herbs and the like, it is necessary to selectively recover only the useful portions of the plant.

To recover the useful portions, when the plant is ground mechanically by using a mixer or the like, the cell walls of agricultural products are destroyed, or the useful ingredients contained in the cells are lost or changed. In particular, the odor components, pigment ingredients, and nutritional elements in the cells are lost or deteriorate due to destruction of the cell walls.

Thus, by the conventional mechanical grinding method, useful ingredients cannot be recovered effectively.

It is an object of the present invention to provide a method for easily preparing food containing single cell plant by employing a method capable of eliminating the problems of the conventional method mentioned above and recovering only useful components of the plant selectively and efficiently. By the method of the present invention, it is possible to develop effective utilization of excessive agricultural products, processed residues, herbs, etc. Therefore, the method of the present invention comprises the steps of causing cell separating enzyme to act on plant at the determined pH to decompose intercellular substances of plant, thereby making plant tissues into single cell gruel, removing the undecomposed substance to obtain single cell gruel suspension, and adding the obtained single cell gruel suspension to food.

The method of the present invention also comprises the step of adding single cell paste obtained by further dehydrating the suspension or its dried preparation, instead of the single cell gruel suspension, to food.

The method of the present invention is intended to make the plant tissue into single cell by using cell separating enzyme of high substrate specificity acting only on specific portions of plant, not decomposing or losing the useful components of the material agricultural product, and the enzyme used herein is described below.

Plants used in the method of the present invention include vegetables, fruits, seaweed, herbs or the like. The plants are pretreated by washing, sterilizing or other process. Cell separating enzyme is caused to act on plants at the determined pH and it is generally preferred to perform in mild conditions of pH 4 to 5 and temperature of 30 to 40°C. To cause the enzyme to act on plant, it is desired to allow to act while stirring by using the minimum amount of diluted solution of the enzyme.

The single cell suspension of the plant obtained by the action of the enzyme contains undecomposed plant husks, fibrous matter, cores and seeds, and by screening and removing these husks, fibrous matter, cores and seeds by using a sieve of, for example, 20-mesh size, it is possible to obtain a single cell gruel suspension to be added to the food.

In the method of the present invention, moreover, instead of the single cell gruel suspension, it is also possible to use a single cell paste obtained by dehydrating the suspension by a method of centrifugal separation or the like, or its dried preparation, and the food containing single cell plant may be prepared by adding such single cell paste or its dried preparation to the food.

The present inventor succeeded in preparation of food, for example, tofu containing single cell gruel suspension of vegetables, fruits or the like, by using overproduced vegetables and fruits, and processed residues and herbs as the material agricultural products and the cell separating enzyme releasing the agglutination of cells. This cell separating enzyme specifically decomposes protopection, hemicellulose or the like agglutinating the plant cells and retaining the tissues and form to release the agglutination of cells and liberate the cells. In the present invention, the minimum a mount of the cell separating enzyme solution act on a plant in mild conditions of pH of 4 to 5 and temperature of 30 to 40°C to make plant soft tissues into single cell gruel. Then, long fibrous matter, hard husks, cores, seeds, etc., not subjected to enzymatic

2

action are removed by 20-mesh sieve to prepare single cell gruel suspension. A small amount (about 5%) of the suspension is added to a relatively thick soybean milk and the resultant mixture is solidified when manufacturing silk-strained tofu, fill up tofu etc., thereby obtaining tofu containing single cell vegetables or the like. Also, it the case of manufacturing a Japanese unbaked cake, the single cell gruel suspension, instead of water, is added to the dough using wheat flour or rice by a proper amount, when kneading dough using wheat flour or rice to prepare the dough containing the suspension, and the Japanese unbaked cake is thereafter prepared in the routine procedure. Furthermore, the single cell gruel suspension is centrifugally separated for about 10 minutes at 1500 G or more to make a single cell paste, and it is properly added to a white bean jam of tebo bean or the like, thereby preparing a single cell-containing kneading bean jam with characteristic pigment of vegetable or fruit, different in flavor and color from ordinary bean jam. In the present invention, the method of manufacturing food, for example, Japanese unbaked cakes using such jam is developed in various manners.

The concept of developing the present invention is that the middle lamella between cell walls in soft tissues of vegetables, fruits and herbs is mainly composed of pectic substance, and it is also present inside the cell wall as matrix component, and takes part in the function of the cell wall, together with the cellulose, hemicellulose, protein, etc. In the middle lamella between cell walls, pectic substance (protopection) plays the role of adhering cells together, thereby providing the tissues with a proper hardness, elasticity, plasticity and other mechanical properties.

On the other hand, plant tissues contain inorganic salts such as salts of Ca, Mg and K which are absorbed as nutrient components, and generally Ca induces intramolecular or intermolecular reaction with free COOH of pectin or COOH of pectic acid existing in the middle lamella to make the entire tissues strict and hard. In this way, pectic substances compose the agglutinating substance of cells, but such insoluble pectins are complicated and complex in structure, and neutral sugars seem to be contained in side chain and principal chain of pectic substances, and bonding between pectic substance and hemicellulose is also presumed. It is therefore impossible to macerate cells containing principal components in the plant by mechanical method. Cell separating enzyme principally consisting of certain endo-plygalacfuronase and pectin-trans-elliminase and not containing cellulase at all for macerating plant cells is recognized, and it easily macerates soft tissues of vegetables and fruits to make into single cells, and hence it is named cell separating enzyme. It is evident that these enzymes separate and macerate the soft tissues of the plant to make into single cells.

The present inventor selectively isolated cell separating enzymes having similar actions from a strain of Rhijopus sp. mold, and studied maceration of the soft tissues of the plant to make into single cells and recovery of single cells. To 6 kg of wheat bran, 1 kg of sawdust was added, and 5 liters of tap water containing 30 ml of 1% HCl was mixed by sprinkling. After 1-hour steam sterilization at 100 °C, spores of this mold were spread at 34 to 35 °C, and were cultivated at 30 °C for 48 to 50 hours under relative humidity (RH) of 85 % and were dried to obtain wheat bran koji. To 1 part of wheat bran koji, 3 parts of warm water mainted at 40 °C was added, and the extracted filtrate was cooled to 0 °C. Then acetone cooled to 0 °C was added to the cooled mass, and 40 to 60 % saturated sediment fractions were collected by centrifugal separation and dried, thereby obtaining cell separating enzyme. To 2 liters of 1 % aqueous solution of this enzyme, 1 kg of processing pulp of Onshu tangerine inline was added, and the mixture was stirred at 40 °C in pH range of 3.0 to 6.0 to obtain gruel. After cellulose was screened by 20-mesh sieve, the yield of single cell preparation was measured, and the maximum yield of 56 to 61 % was obtained at pH 4.0 to 5.0. The optimum temperature for action was between 30 and 40 °C. The completion time (minutes) required for making gruel (single cell) of various vegetables was measured, and the results are shown in Table 1.

Table 1

|  | Leaf mustard | Radish leaves | Spinach | Garland |
|---|---|---|---|---|
| Immature leaves | 73 (min.) | 90 (min.) | 180 (min.) | 100 (min.) |
| Mature leaves | 95 (min.) | 110 (min.) | 180 (min.) | 120 (min.) |
| Overmature leaves | 100 (min.) | 180 (min.) | 180 (min.) | 150 (min.) |

3

Depending on the variety of vegetables, tissues of immature young leaves are soft, therefore the complete time required for making gruel is short, and as the leaves become mature and overmature, tissues come to be hard and the required gruel making time is longer. The completion time for making gruel varies with the variety of vegetables.

The relation between the yield (%) of single cell gruel and 20-mesh screening residue (%) by variety of vegetables is shown in Table 2.

Table 2

| | Leafe mustard | | Radish leaves | | Spinach | | Garland | |
|---|---|---|---|---|---|---|---|---|
| | Single cell | Residue | Single cell | Residue | Single cell | Residue | Single cell | Residue |
| Immature leaves | 62.0 % | 10.8 % | 54.3 % | 11.2 % | 68.2 % | 11.5 % | 64.9 % | 10.1 % |
| Mature leaves | 58.4 % | 12.1 % | 50.1 % | 14.3 % | 64.1 % | 13.2 % | 61.4 % | 12.5 % |
| Overmature leaves | 50.8 % | 18.5 % | 47.0 % | 17.5 % | 58.2 % | 15.9 % | 59.0 % | 14.8 % |

As the vegetables become overmature, it is difficult to change overmature vegetables to single cells. When gruel making is performed for such overmature vegetables for a fixed time, the gruel rate is low, and the single cell yield becomes smaller, while the residue increases.

Chinese citron husks were cut in 1 cm squares, and the relation between pH ranging from 3.0 to 6.0 and the single cell yield (%) was studied, and the results are shown in Table 3.

Table 3

| pH | 3.0 | 4.0 | 4.5 | 5.0 | 5.5 | 6.0 |
|---|---|---|---|---|---|---|
| Single cell yield | 32 % | 42 % | 48 % | 50 % | 48 % | 40 % |

The optimum pH for obtaining gruel was 5.0, and there was no significant difference between 4.5 and 5.5.

In the case of hard tissues such as overmature Chinese citron husks, shortening of the gruel making time was studied by softening the tissues by preliminary heating and boiling, or steaming. The results are shown in Table 4.

Table 4

| Boiling time (minute) | Single cell yield (%) | Pectin in single cell (%) | Bitterness in single cell |
|---|---|---|---|
| 0 | 46.2 | 3.98 | Present |
| 20 | 70.8 | 3.91 | Slightly present |
| 30 | 70.8 | 3.88 | Absent |
| 60 | 80.1 | 3.86 | Absent |

When protopection which is an intercellular substance is changed into pectin by heating tissues, the enzyme action is facilitated, and the single cell making rate is increased, and the single cell yield is high. There is, however, almost no difference in the pectin content in single cells.

Next, pumpkin, carrot, sweet potato and apple were stirred at 40°C in pH 4.5, in a twice quantity of 1 % solution of the same enzyme to make gruel. The time (minutes) required for making single cells was measured, and the results are shown in Table 5 .

Table 5

| | Pumpkin | Carrot | Sweet potato | Apple | Citron husk |
|---|---|---|---|---|---|
| 30 (min.) | 51 % | 42 % | 56 % | 70 % | 58 % |
| 45 (min.) | 62 % | 58 % | 62 % | 85 % | 66 % |
| 60 (min.) | 70 % | 66 % | 70 % | 100 % | 74 % |
| 90 (min.) | 90 % | 85 % | 88 % | — | 86 % |
| 120 (min.) | 95 % | 100 % | 100 % | — | 95 % |

The single cell yield of tuberous vegetables and fruits differed with the hardness of tissues. The soft apples were completely made into gruel in 60 minutes, and carrots and sweet potato took 120 minutes for complete gruel, and the outermost husks of the pumpkin and citron were difficult to change into gruel. Therefore, it is necessary to remove the outermost husk when making single cells. In this way, soft plant tissues of vegetables and fruits are easily made into gruel almost completely by the cell separating enzyme to become single cells. In these single cells, depending on the kind of plant, chlorophyll is contained in the chloroplast, and carotenoid and other pigment compounds are present in the plastid. These chloroplast and plastid may be utilized as natural pigments of plants. Besides, the gruel solution contains all nutritional components included in the vegetable, fruit and cells, and food fibers in the cell membrane, cell wall and intercellular substance, and therefore recoveries of only gruel solution or single cells to add to food provide a new method of making food from vegetables and fruits.

The present inventor developed an industrial method of obtaining food by using the single cell gruel obtained by stirring vegetables and fruits in the presence of cell separating enzyme (enzyme for making single cell gruel of plant tissue). To promote the enzymatic reaction, without installing a new machine, agitation and hot insulation were effected by using bakery kneader or confectionary cake mixer (planetary type), and was carried out at 40° C by agitating at high speed in pH of around 4.3 while preventing bacterial contamination. To make the single cell gruel suspension, the material vegetables and fruits were preliminarily washed sufficiently and sterilized repeatedly. After sterilizing with sodium hypochlorite, the materials were further washed in water sufficiently, and chopped by food slicer and made into gruel by the action of enzyme. After making into gruel, undecomposed fibers and husks were removed by 20-mesh sieve, thereby preparing single cell gruel suspension.

Practical examples of vegetables are described below.

The sterilized and washed carrot, 8 kg, was sliced into 3 mm square pieces by food slicer, and 2 kg of sterilized cooled water was added to sliced carrot. After the pH of the mixture was adjusted to 4.3 with 20 % citric acid solution, 0.5 %, based on the carrot, of the cell separating enzyme was added to the mixture, and the carrot was processed by confectionary cake mixer, while adjusting the water temperature of the jacket at 40° C and was made into gruel for 1 hour while rotating at high speed. Afterwards, undecomposed fibrous matter was removed by 20-mesh stainless steel sieve, and 9.5 kg of single cell gruel suspension of carrot was obtained. This suspension, when observed microscopically, was found to be a suspension composed of red carrot single cells, amorphous matter of intercellular substance, and fibers.

Similarly, 8 kg of pumpkin with thick meat and a deep yellow color was sliced into 1 cm square pieces by food slicer, and 2 kg of sterilized cooled water was added to sliced pumpkin. After the pH of the mixture was adjusted to 4.3 with 20 % citric acid, 0.5 %, based on the pumpkin, of the cell separation enzyme was added to the mixture, and the pumpkin was processed by bakery kneader at 40° C by rotating at high speed for 1 hour to obtain single cell gruel. Afterwards, the undecomposed deep green hard husk was removed by 20-mesh sieve, and 9 kg of deep yellow single cell gruel suspension of pumpkin was obtained.

Besides, 8 kg of spinach sterilized by sodium hypochlorite and washed in water was chopped by food slicer, and 5 kg of sterilized water was added to sliced spinach. After the pH of the mixture was adjusted to 4.3 with 20 % citric acid, the cell separating enzyme was added by 0.5 % equivalent amount of spinach, and the mixture was processed by cake mixer at 40° C for 1 hour by agitating at high speed to obtain single cell gruel. Afterwards, the undecomposed fibrous matter was removed by 20-mash sieve, and 9 kg of single cell gruel suspension was obtained.

These single cell suspensions of carrot, pumpkin and spinach were centrifugally separated for 10 minutes at 1500 G or more, and about 580 g of carrot single cell paste of reddish orange color, about 650 g of pumpkin single cell paste of yellowish orange color, and about 500 g of spinach single cell paste of deep green color were obtained. When these single cell pastes were freezed drying or spray drying, 110 g of single cell dry preparations were obtained.

The present inventor, in order to use such single cell suspensions in food manufacturing, adjusted, in the case of making silk-strained tofu, the soybean milk concentration to Baume' of 13 degrees, 1 degree higher than soybean milk concentration in ordinary manufacturing process of silk-strained tofu, mixed the preliminarily adjusted single cell suspension of the desired vegetable to the soybean milk by 5 % of the soybean, and coagulated the soybean milk by coagulating agent in the routine process, thereby obtaining silk-strained tofu colored in a very pale green color, silk-strained tofu colored in a very pale yellow color, or silk-strained tofu colored in a very pale red color by uniform mixing of fine single cells of vegetable.

When mixing in the dough of Japanese cake, the single cell gruel suspension of vegetables or fruits is added to the dough by using vegetables or fruits having a particles size similar to that of rice flour or wheat flour used as the dough at the time of preparation of the dough, and a desired dough with specific color or odor is prepared owing to the original pigments contained in single cells. When mixing single cell dry preparations, they may be mixed in the flours beforehand.

Further, when using in the kneading bean jam for cake, the single cell paste of vegetables or fruits is added by several percent of raw bean jam, to the colorless raw bean jam prepared from white beans such as tebo bean. Thus, the kneading bean jam having a characteristic color and flavor may be easily manufactured, owing to the natural pigment components such as chloroplast and plastid contained in the cells of the single cell paste of vegetables or fruits.

Furthermore, when preparing doughs for fine noodles, kishimen or Chinese noodles of three or five colors, about 5 %, based on the wheat flour, of single cell suspension is added to the wheat flour and knead to make the dough, and mentai are made therefrom, thereby manufacturing three-color noodles colored by single cell particles containing characteristic natural pigments of pale yellow, pale green and pale red. Or when using single cell dry preparation, it may be directly mixed in flour. When single cells of vegetables and fruits with different colors are used, five-color or seven-color noodles may be manufactured similarly.

In the method of the present invention, different from the conventional natural pigments manufactured in complicated processes, by extracting from plants, insects or molds, using water and solvents, the pigments are taken out in moderate conditions from fresh plants, and the chloroplast and plastid are directly used in single cells enveloped in a double structure of cell wall and cell membrane, so that discoloration due to oxidation hardly occurs.

When manufacturing icecream, by using a single cell paste, icecream with desired color and flavor may be manufactured.

In manufacture of konnyaku, when diluting and adjusting the fine powder, single cell gruel suspension is mixed by 30 to 50 % of the fine powder, to the fine powder to obtain the mixture having a desired color, and then the konnyaku is manufactured by the conventional method. A product possessing a characteristic color of the single cell is obtained although the color is slightly changed due to the strong alkalinity of the lime water used in the process. When using single cell dry preparation, it may be directly mixed in the fine powder.

In vegetables, fruits, herbs and other plants, many cells are agglutinated by middle lamella to compose the plant body. In the method of the present invention, using a necessary quantity of cell separating enzyme for decomposing the pectic substance (protopectin) which is the principal component of agglutinous substance, soft tissues of washed, sterilized and sliced vegetables, fruits or herbs are processed by cake mixer or bakery kneader at 30 to 40°C in pH 4 to 5, while agitating for a short time to obtain single cells. Afterwards, the macerated fibers are screened out by, for example, 20-mesh sieve to prepare single cell suspension, or it is dehydrated by centrifugal separation to obtain single cell paste, or this paste is freezed drying or spray drying to obtain dry preparation. That is, such suspension, extract or dry preparation may be added as required in the food manufacturing process to manufacture food having characteristic flavor and color. By adding cells containing principal components of plants, the nutritional balance of processed food may be enhanced, or the specific pigments of plants contained in cells may be used as natural pigment, and moreover the pigment hardly changes by oxidation because the cell is enveloped by the cell wall and membrane. In certain processed foods, the intrinsic flavor is important, but since the single cells are used in the present invention, the characteristic of the processed food will not be sacrificed though the flavor of the added plant is detected slightly owing to the cell wall and membrane.

Example 1

8 kg of pumpkin with thick meat and deep yellow color was sufficiently washed, and immersed in a solution containing 250 ppm of sodium hypochlorite for 20 minutes to be sterilized, and was washed again in water to remove the sodium hypochlorite completely. After pumpkin thus processed was sliced in 3 mm square pieces by food slicer, the pieces were put into sterilized cake mixer, and heated to be sterilized, and then cooled to 50°C. 2 kg of water and 40 g of the cell separating enzyme were added to the sliced pumpkin, and the mixture was stirred for 1 hour by rotating at high speed, at pH 4.3, while keeping at 40°C, to completely make into single cell gruel. Since the hard portion of the deep green color of the husk is not made into gruel, it was removed by 20-mesh sieve after making gruel, thereby obtaining 9.58 kg of single cell suspension. At the indication of 13 degrees by the refractometer for sugar (5-fold water added), 50 ml (5 %) of this single cell suspension was mixed to 10 liters of soybean milk maintained at 80°C. It is equivalent to 42 g of pumpkin. A coagulating agent dissolved and suspended in water was added to the mixture by the routine method, and mixed, and the resultant mixture was poured into a mold to be solidified, thereby obtaining a silk-strained tofu. The obtained tofu presented a uniform pale yellow color, and a sticky and sweet tofu was obtained. Since the pumpkin odor is contained in cells, the solidified tofu was almost free from the pumpkin odor, and thus, a favorite tofu with stickness, color and sweetness, not sacrificing the original odor of soybean milk, was obtained.

Example 2

Carrot with deep rouge color or deep orange color was washed, sterilized and washed again in the same procedure as in Example 1, and sliced by food slicer. 8 kg of the sliced carrot was put into a cake mixer, heated to be sterilized, and cooled to 50°C. After adding 2 kg of warm water, the pH was adjusted to 4.3 with 10 % citric acid, and 80 g of the cell separating enzyme was added, and the mixture was stirred at high speed for 1.5 hours while keeping at 40°C to change completely into single cell gruel. To remove fibers, it was screened by 20-mesh sieve, and was dehydrated by centrifugal separation at 1500 G, thereby obtaining a single cell paste preparation. The yield was 5.6 kg. When making a bean jam, the single cell paste preparation was added by an equivalent of 5 % of the ultraweaked wheat flour or rice flour to be used as the bean jam crust, to the flour together with water or warm water and the mixture was kneaded, thereby obtaining a dough of pale rouge color or pale orange color containing carrot cells. The bean jam was made by enveloping the kneading bean jam by the dough according to the conventional method, and a steamed bean jam was produced by steaming. The obtained bean jam was favorite, having a brilliant glossy crust with a pale red color. In the case of adding single cell dry preparation, it may be mixed by one-fifth of the paste.

Example 3

Deep green spinach rich in leaf meat was washed, sterilized and washed completely in the same procedure as in Example 1, and sliced by food slicer. 8 kg of the sliced spinach was put in a cake mixer, and heated and sterilized, and then 8 kg of warm water maintained at 50°C was added to the sliced spinach. After the pH of the mixture was adjusted to 4.3 with 20 % citric acid, 40 g of cell separating enzyme was added to the mixture, and the resultant mixture was stirred at high speed for 1 hour at 40°C to change completely into single cell gruel. Later, fibers were screen and removed by 20-mesh sieve, and 12 kg of single cell gruel suspension was obtained. Putting 1 kg of palished rice washed in water into an electric rice cooker, 100 ml of single cell suspension was added, and rice was cooked by adding water by the conventional method. The obtained boiled rice had a pale green color. When manufacturing fine noodles, to 10 kg of strong wheat flour, 3.5 liters of brine at Baume' of 12 degrees and 500 ml of single cell suspension were added, and kneaded by mixer, thereby preparing the dough for fine noodles. The fine noodles obtained from the dough had a brilliant pale green color. In these fine noodles, different from the natural chlorophyll prepared by extraction, since the plastid contained in cell membrane is directly used, discoloration due to oxidation is less, and the color stability is high, and high quality and good favorite were realized.

According to the method of the present invention, the food containing cells including the useful substances of plants is obtained, and the processed food excellent in nutritional balance is manufactured. Besides, when the plants containing natural pigments are used, the food can be colored by the natural pigment contained in the single cells of the plant, and foods of different colors may be manufactured. Moreover, since the natural pigments and useful ingredients are enveloped within the cell wall or membrane, discoloration or denaturation due to oxidation is rare, and the original flavor of the processed food itself is not sacrificed.

By the method of the present invention, excessive agricultural products and processing residues can be effectively utilized, and only the useful components can be selectively and efficiently recovered, and hence the method of the present invention is very useful in the industrial applications.

**Claims**

1. A method for preparing food containing single cell plant comprising the steps of causing a cell separating enzyme to act on a plant at the determined pH to decompose the intercellular substance of plant, thereby making plant tissues into single cell gruel, removing the undecomposed substances to obtain single cell gruel suspension, and adding the obtained single cell gruel suspension to food.

2. A method according to claim 1, characterized in that, instead of the single cell gruel suspension, the single cell paste obtained by further dehydrating the suspension or its dried preparation is added to the food.

3. A method according to claim 1, characterized in that the plant is at least one selected from the group consisting of vegetables, fruits, seaweed and herb.

4. A method according to claim 1, characterized in that the pH range is from 4 to 5.

5. A method according to claim 1, characterized in that the temperature range is from 30 to 40°C.

6. A method according to claim 1, characterized in that the cell separating enzyme is mainly composed of endo-polygalacfuronase and pectin-trans-elliminase, not containing cellulase at all.

7. A method according to claim 1, characterized in that a minimum quantity of diluted solution of the cell separating enzyme is used and applied during agitation, in order to cause the cell separating enzyme to act.

8. A method according to claim 1, characterized in that the undecomposed substances are removed by screening.

9. A method according to claim 1, characterized in that the food is selected from the group consisting of tofu, cakes, noodles, boiled rice, konnyaku and icecream.